(19) Europäisches Patentamt
European Patent Office
Office européen des brevets

(11) **EP 3 652 425 B1**

(12) **FASCICULE DE BREVET EUROPEEN**

(45) Date de publication et mention de la délivrance du brevet:
**26.05.2021 Bulletin 2021/21**

(21) Numéro de dépôt: **18758920.5**

(22) Date de dépôt: **13.07.2018**

(51) Int Cl.:
*F02C 7/22* *(2006.01)*    *F02C 9/26* *(2006.01)*

(86) Numéro de dépôt international:
**PCT/FR2018/051778**

(87) Numéro de publication internationale:
**WO 2019/012238 (17.01.2019 Gazette 2019/03)**

(54) **CIRCUIT ET PROCÉDÉ DE DOSAGE DE CARBURANT À COMPENSATION DE VARIABILITÉ DE LA DENSITÉ DU CARBURANT**

KRAFTSTOFFMESSSCHALTUNG UND VERFAHREN MIT KOMPENSATION DER KRAFTSTOFFDICHTEVARIABILITÄT

FUEL METERING CIRCUIT AND METHOD WITH COMPENSATION FOR FUEL-DENSITY VARIABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2017 FR 1756706**

(43) Date de publication de la demande:
**20.05.2020 Bulletin 2020/21**

(73) Titulaire: **Safran Aircraft Engines**
**75015 Paris (FR)**

(72) Inventeurs:
• **PORA, Loïc**
**77550 Moissy-Cramayel Cedex (FR)**
• **JOUDAREFF, Arnaud Bernard Clément Thomas**
**77550 Moissy-Cramayel (FR)**

(74) Mandataire: **Regimbeau**
**20, rue de Chazelles**
**75847 Paris Cedex 17 (FR)**

(56) Documents cités:
FR-A1- 3 022 000      US-A- 4 809 499
US-A1- 2016 123 860

EP 3 652 425 B1

**Description**

DOMAINE DE L'INVENTION

L'invention concerne un circuit de dosage de carburant d'une turbomachine, et un procédé de dosage pouvant être mis en œuvre par un tel circuit.

ARRIERE-PLAN TECHNOLOGIQUE

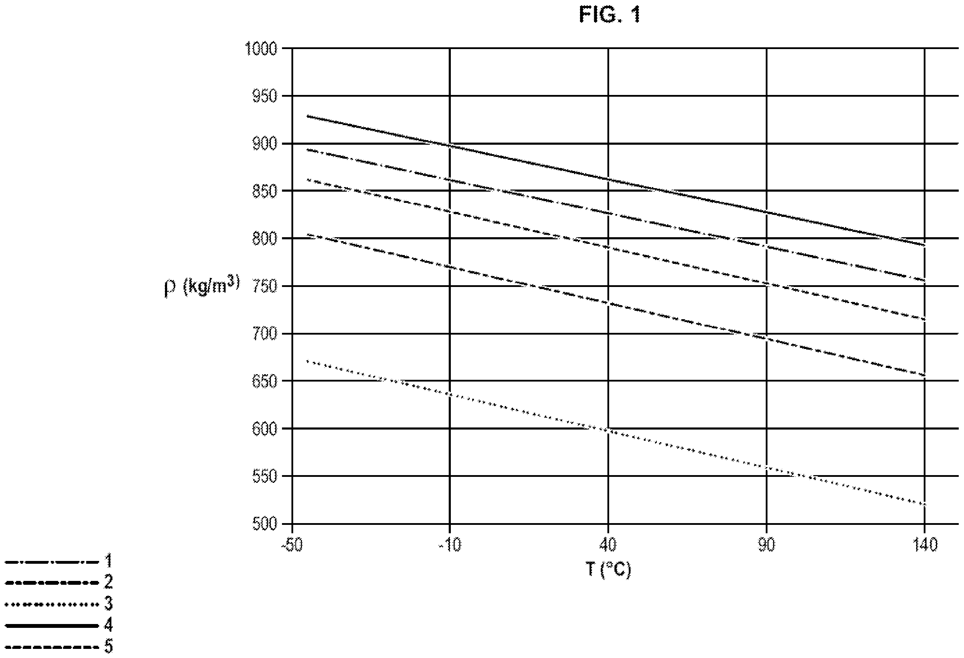

Une turbomachine comprend classiquement un circuit de dosage de carburant comprenant un doseur de carburant, délivrant à la chambre de combustion de la turbomachine un débit de carburant adapté au régime de fonctionnement de la turbomachine.
Le circuit de dosage comprend également (pour le cas des turboréacteurs équipant les avions avec des réservoirs de carburant intégrés à l'appareil - vs les architectures d'avions équipés de turbomachines autres que turboréacteurs et possédant un réservoir intégré) une pompe qui prélève le carburant depuis le réservoir de carburant de la turbomachine, pour l'acheminer vers le doseur, ainsi qu'une soupape de régulation qui permet de faire recirculer vers la pompe un débit de carburant excédentaire fourni au doseur.
Chaque régime de fonctionnement de la turbomachine impose un débit massique de carburant correspondant qui doit être délivré par le doseur. En référence à la figure 1, on a représenté la densité de différents types de carburants (chaque courbe numérotée 1 à 4 correspondant à un carburant différent, la courbe numérotée 5 correspond à un exemple de dimensionnement du moteur) en fonction de la température. Il apparaît sur cette figure que la densité d'un carburant peut varier de façon importante, notamment en fonction du type de carburant utilisé (carburants plus ou moins volatiles) et de la température du carburant. Actuellement, les doseurs sont commandés à partir de lois de commande qui lient un débit massique cible désiré à une position du doseur, pour des conditions fixées de température et de type de carburant.
Par conséquent ces lois de commande ne permettent pas de tenir compte de la variabilité de la densité du carburant dans la commande du doseur et donc d'adapter précisément le débit massique dosé à la densité du carburant pour obtenir le débit massique cible.
En outre, il n'est pas possible de connaître précisément le débit massique délivré par le doseur car les débitmètres utilisés pour connaître la quantité de carburant délivrée par le doseur sont des débitmètres volumiques, les débitmètres massiques ne présentant pas une réactivité suffisante pour fournir une information fiable et adaptée à chaque instant au régime moteur de la turbomachine.
Il en résulte une imprécision importante, de l'ordre de 12%, sur le débit massique délivré par le doseur à la chambre de combustion de carburant.
Il est possible de calculer la part de l'imprécision dans le débit délivré par le doseur, qui résulte de la méconnaissance de la densité du carburant par la formule (A) suivante exprimant le débit délivré :

$$Wf = K.S.\sqrt{\rho.\Delta P} \qquad (A)$$

Avec :

- Wf le débit massique injecté par le doseur en kg/h
- $\rho$ la densité du carburant en kg/L
- K une constante, et
- S la section d'ouverture d'une fente du doseur en mm$^2$

L'impact de la densité sur le débit injecté est la suivante :

$$\frac{dWf}{Wf} = -\frac{1}{2}.\left(\frac{d\rho}{\rho}\right)$$

Une densité variant de 700 à 900 kg/m$^3$ crée une imprécision sur le débit massique injecté comprise entre -6.4 et 6.1%, par rapport à une loi calculée avec une densité moyenne de 803 kg/m$^3$.
Or, cette imprécision impacte le dimensionnement de la turbomachine.
En particulier, un changement important de régime de la turbomachine, par exemple d'un régime de vitesse élevé à un régime de ralenti ou inversement, entraine une variation brusque du débit délivré à la chambre de combustion. Cette variation est opérée en moins de temps que la variation de la vitesse de rotation de la turbomachine. Des tolérances de fonctionnement, appelées marges au pompage et à l'extinction, doivent donc être définies pour que la turbomachine continue de fonctionner malgré un débit délivré différent du juste besoin nécessaire au fonctionnement et adapté à sa vitesse de rotation actuelle, ces tolérances étant obtenues par un surdimensionnement de la turbomachine.

Du fait de l'imprécision importante sur le débit délivré par le doseur, les tolérances ainsi que le surdimensionnement de la turbomachine doivent être encore plus importants.

Certaines solutions ont pu être proposées comprenant l'utilisation d'un capteur de température, combinée à un calculateur corrigeant la commande du doseur en fonction de lois de compensation établies en fonction de la densité ou de la température du carburant.

Cependant cette solution ne permet de corriger qu'une partie des écarts liés à la température, en ajoutant par ailleurs d'autres sources d'incertitude liées à l'élaboration de la loi.

Le document FR 3 022 000 décrit un circuit de dosage de carburant conforme au préambule de la revendication 1.

Le document US 4 809 499 décrit un densimètre comprenant une pompe qui envoie un liquide avec un volume constant à travers un orifice fixe et un capteur de pression qui mesure une différence de pression dans le liquide à travers cet orifice.

RESUME DE L'INVENTION

L'invention a pour but de pallier les inconvénients de l'art antérieur en proposant un système de dosage de carburant présentant une précision accrue sur le débit dosé par rapport à l'art antérieur.

Pour cela, l'invention propose un circuit de dosage de carburant d'une turbomachine comprenant :

- un doseur,
- une pompe configurée pour faire circuler un débit de carburant vers le doseur,
- une soupape de régulation configurée pour renvoyer un débit excédentaire de carburant délivré au doseur vers la pompe en fonction d'une différence de pression de carburant aux bornes du doseur,
- un diaphragme et
- un débitmètre volumique configuré pour déterminer le débit volumique du carburant passant par le diaphragme.

Le diaphragme et le débitmètre volumique sont montés en parallèle du doseur dans un conduit de dérivation, en aval de la soupape de régulation, afin de déterminer une densité du carburant circulant dans le circuit de dosage.

Certaines caractéristiques préférées mais non limitatives du circuit de dosage décrit ci-dessus sont les suivantes, prises individuellement ou en combinaison :

- le débitmètre volumique est monté en amont ou en aval du diaphragme.
- le circuit de dosage comprend en outre une carte électronique configurée pour recevoir une information du débitmètre volumique sur le débit volumique du carburant et ajuster une consigne de contrôle du doseur en tenant compte de la densité du carburant ainsi déterminée.
- la pompe comprend une pompe volumétrique.

Selon un deuxième aspect, l'invention propose également une turbomachine comprenant un tel circuit de dosage.

Selon un troisième aspect, l'invention propose un procédé de dosage de carburant mis en œuvre dans un circuit de dosage de carburant, caractérisé en ce qu'il comprend les étapes suivantes :

- déterminer une différence de pression aux bornes du doseur,
- mesurer un débit volumique du carburant à l'aide du débitmètre volumique,
- calculer, à partir de la différence de pression, du débit volumique et de constantes liées au diaphragme , la densité du carburant.

Certaines caractéristiques préférées mais non limitatives du procédé de dosage décrit ci-dessus sont les suivantes, prises individuellement ou en combinaison :

- le procédé comprend en outre une étape au cours de laquelle le débitmètre transmet une information sur le débit volumique du carburant à une carte électronique et la carte électronique ajuste une consigne de contrôle du doseur en tenant compte de la densité du carburant.
- le débit du carburant est contrôlé en faisant recirculer un débit variable de carburant vers la pompe au moyen de la soupape de régulation.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

- la figure 1, déjà décrite, représente la variation de densité de plusieurs carburants en fonction de la température.
- La figure 2 représente schématiquement un circuit de dosage selon un mode de réalisation de l'invention.

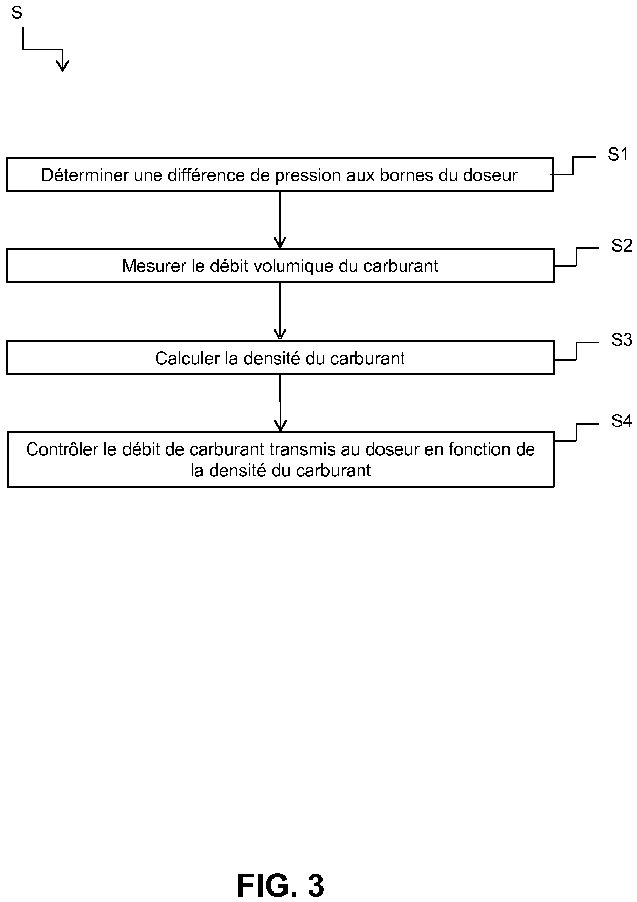

- La figure 3 est un organigramme illustrant des étapes d'un exemple de réalisation d'un procédé de dosage conforme à l'invention.

DESCRIPTION DETAILLEE D'UN MODE DE REALISATION

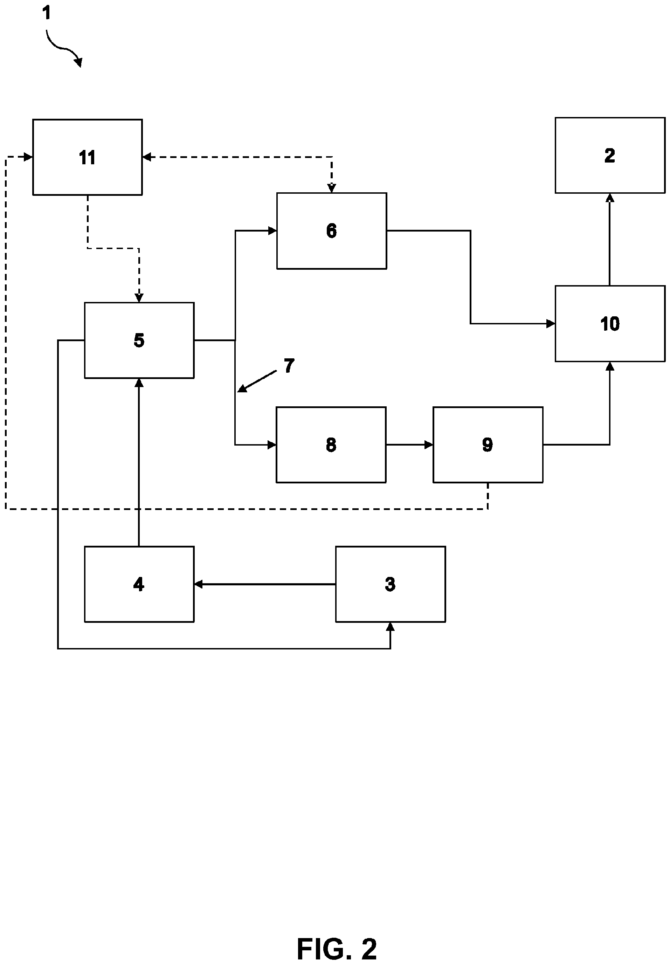

En référence à la figure 2, on a représenté un circuit de dosage 1 de carburant d'une turbomachine, comportant au moins une chambre de combustion 2 et un réservoir de carburant 3.

Le circuit de dosage de carburant 1 comporte une pompe volumétrique 4, un doseur 6 et une ligne d'alimentation du doseur dite à haute-pression, reliant la sortie de la pompe volumétrique 4 à l'entrée du doseur 6. Le doseur 6 est adapté pour délivrer un débit massique cible à la chambre de combustion 2 à partir d'un débit initial qui lui est délivré par la pompe volumétrique 4 via la ligne haute-pression.

Le doseur 6 comprend une surface, appelée surface d'ouverture du doseur, de taille variable, qui permet l'écoulement du liquide. Le débit délivré par le doseur 6 est donc notamment fonction de la surface d'ouverture.

La surface d'ouverture du doseur 6 est variable sur pilotage d'une servovalve, qui commande le déplacement d'une pièce mobile de dosage pour obstruer graduellement un orifice ou fente de dosage. Un capteur de position permet de connaitre la position de la pièce mobile. Le capteur de position est typiquement un capteur LDVT (« linear variable differential transformer »).

Il existe différents types de doseurs 6, par exemple à fente de dosage classique, décrite dans le document US 7 526 911, ou à fente exponentielle, décrite dans les documents EP 1 231 368 et FR 2 825 120. Dans le cas d'une fente exponentielle, la surface d'ouverture augmente exponentiellement avec le déplacement de la pièce mobile, qui permet une meilleure précision à bas débit.

Le circuit de dosage peut en outre comprendre un clapet stop 10 ou HPSOV (acronyme anglais de High Pressure Shut-off Valve) configuré pour autoriser ou bloquer une injection de carburant dans la chambre de combustion.

Optionnellement, le circuit de dosage 1 peut comprendre une carte électronique 11 pour contrôler le dosage du carburant. Pour cela, la carte électronique peut par exemple communiquer avec le doseur 6 dans les deux sens : elle peut envoyer des consignes de position au doseur 6 et récupérer des données relatives au doseur.

La carte électronique 11 peut en outre être reliée à une unité de contrôle, externe au dispositif. L'unité de contrôle est typiquement un module de régulation électronique ECU (acronyme anglais de engine control unit) d'un FADEC (acronyme anglais de de Full Authority Digital Engine Control), c'est-à-dire d'un système de régulation numérique pleine autorité qui contrôle les géométries variables (actionneurs, doseurs, etc.) de l'aéronef. L'unité de contrôle peut se trouver dans le périmètre avion et de fait ne pas être dédiée uniquement à la régulation du carburant. Inversement, la carte électronique 11 est préférablement exclusivement dédiée au dosage du carburant et aux fonctions annexes. En variante, il est également possible d'avoir un contrôleur supplémentaire, en plus du contrôleur principal pouvant être notamment exclusivement réservé au dosage. La liaison entre l'unité de contrôle et la carte électronique 11 se fait généralement avec un harnais de connexion.

Seule la carte électronique 11 du circuit de dosage 1 est reliée à l'unité de contrôle de l'aéronef (par le biais d'un unique harnais), la redistribution étant ensuite effectuée au sein du circuit de dosage 1 par la carte électronique 11. Le circuit de dosage 1 comprend donc une seule entrée, en provenance de l'unité de contrôle, à destination de la carte électronique 11, qui décline cette entrée en plusieurs sorties, à savoir notamment le doseur 6.

Le circuit de dosage de carburant 1 comporte en outre une soupape de régulation 5, adaptée pour réguler le débit délivré au doseur 6. En particulier, la soupape de régulation 5 est adaptée pour renvoyer un débit excédentaire de carburant parvenant au doseur 6 en entrée de la pompe volumétrique 4, en fonction de la différence de pression aux bornes du doseur 6. La soupape de régulation 5 sert également à maintenir constant le différentiel de pression $\Delta P$ de carburant entre l'amont et l'aval du doseur 6.

Typiquement, la soupape de régulation 5 comprend un obturateur mobile agissant contre l'action d'un ressort taré sur une valeur prédéterminée du différentiel de pression $\Delta P$ à maintenir. L'obturateur est généralement perforé de manière à évacuer du carburant sur une canalisation menant à la boucle de recirculation, en fonction de sa position d'équilibre contre l'action du ressort.

Un exemple de soupape de régulation 5 pouvant être utilisé ici a été décrit dans le document FR 1655944, déposé le 27 juin 2016 par la Demanderesse.

Afin de permettre le réglage précis pour les faibles ouvertures, le circuit de dosage 1 comprend en outre un conduit de dérivation 7 placé en parallèle du doseur 6 et comprenant un diaphragme 8 de débit minimum et un débitmètre volumique 9.

Le diaphragme 8 présente une section $S_d$ fixe, réglée durant des essais préalables effectués sur banc. Typiquement, le diaphragme peut comprendre un orifice de dimension et de forme fixes.

Aux bornes du diaphragme 8 est appliquée une différence de pression qui, comme nous l'avons vu plus haut, est régulée et fixée par la soupape de régulation 5. Cette différence de pression ΔP est égale à la différence de pression ΔP aux bornes du doseur 6, puisque le diaphragme est monté en parallèle du doseur 6 dans le circuit de dérivation 7.

La différence de pression ΔP peut notamment être mesurée par un capteur différentiel.

Par ailleurs, la perte de charge due à la traversée du diaphragme 8 est déterminée par la formule (B) suivante :

$$\Delta P = \frac{1}{2}\rho Q^2 \frac{\xi}{{S_d}^2} \qquad\qquad (B)$$

Où ρ est la densité du carburant,

ξ est le coefficient de perte de charge du diaphragme 8, qui est une constante,

Q est le débit volumique traversant le diaphragme 8 de section $S_d$.

Or, la pression en amont et en aval du diaphragme 8 est connue et fixée par la soupape de régulation 5. Elle peut en outre être mesurée à l'aide du capteur différentiel. La section du diaphragme 8 est déterminée préalablement en essais effectués sur banc. Le débit volumique est mesuré à l'aide du débitmètre volumique 9 qui est placé en série avec le diaphragme 8 (en amont ou en aval du diaphragme 8, dans le conduit de dérivation 7). Enfin, le coefficient de perte de charge du diaphragme 8 est une constante : par conséquent, le rapport $\frac{\xi}{{S_d}^2}$ est également constant.

On en déduit que, aux erreurs de mesures près, d'après la formule (B), le débit volumique Q varie exclusivement en fonction de la densité du carburant.

Le diaphragme 8 et le débitmètre volumique 9 placés en série dans le conduit de dérivation forment donc un densimètre en ligne permettant d'améliorer la précision globale du circuit de dosage 1.

Le cas échéant, lorsque le circuit de dosage 1 comprend une carte électronique 11, les mesures effectuées par le débitmètre 9 sont communiquées à la carte électronique 11 afin que celle-ci en déduise la densité du carburant. La carte électronique 11 peut alors ajuster la consigne de contrôle du doseur 6 en tenant compte de la densité volumique du carburant.

En variante, en l'absence de carte électronique 11 dans le circuit de dosage 1, les mesures effectuées par le débitmètre 9 sont communiquées directement à l'unité de commande du doseur 6.

Afin d'estimer la précision de dosage obtenue grâce au diaphragme 8 et à l'ajout du débitmètre 9, il est nécessaire de tenir compte de la précision du calibrage obtenue préalablement lors d'essais effectués sur banc essai et des imprécisions de mesure en fonctionnement normal.

La précision d'un débitmètre volumique 9 est de l'ordre de +/-0.8% de la mesure. Selon le débit mesuré, cet écart possible prend en compte l'ensemble de la plage de température. Toutefois, dans le cas contraire, il est possible de mesurer la température dans le conduit de dérivation 7 comprenant le diaphragme 8 et le débitmètre 9 et d'appliquer un correctif sur le débit lu, les débitmètres à turbine étant sensibles à la viscosité du fluide.

Par ailleurs, lors des essais préalables effectués sur banc, les électroniques sont calibrées plus finement que des électroniques embarquées. L'incertitude pour la caractérisation (habituellement de +/-0.5% de la mesure) est donc plus faible.

Dans ce qui suit, d'un point de vu conservatif, nous considérerons une précision de mesure identique en calibration et en fonctionnement toute température confondue de +/-0.8% de la mesure.

De même, un capteur de pression différentiel a une précision de +/-0.8% de la pleine échelle.

Nous considérerons pour le bilan une échelle de 5 bar, soit une précision de l'ordre de +/-1% pour une mesure de 4 bar (valeur classique de différence de pression régulée).

En considérant la formule suivante, définissant le débit volumique injecté :

$$Q = A.S.\sqrt{\frac{\Delta P}{\rho}}$$

où: Q est le débit mesuré en L/h à l'aide du débitmètre volumique 9

$\rho$ est la densité du carburant en kg/L

S est la section de passage du carburant, liée à l'ouverture du doseur 6

A est l'ouverture de la fente de dosage du doseur 6 en mm

on détermine l'impact de la pression et du débit volumique sur la mesure de la densité $\rho$ du carburant :

$$Q = A \times S \times \sqrt{\frac{\Delta P}{\rho}}$$

soit :

$$\rho = A \times S \times \frac{\Delta P}{Q^2}$$

et

$$\frac{d\rho}{\rho} = 2 \times \frac{dQ}{Q} + \frac{d\Delta P}{\Delta P}$$

Toutes ces erreurs de mesures sont aléatoires. Ainsi, l'erreur sur la densité $\varepsilon_\rho$ sera égale à :

$$\varepsilon_p = \sqrt{\left(\varepsilon_{\Delta P_{calibration}} + \varepsilon_{\Delta P}\right) + 2 \times \left(\varepsilon_{Q_{calibration}} + \varepsilon_Q\right)}$$

$$\varepsilon_p = \pm\sqrt{1 + 1 + 2 \times (0,8 + 0,8)} = \pm 2,3\,\%$$

L'erreur sur le débit corrigé par la densité $\frac{dQ}{Q} = 0.5 \times \frac{d\rho}{\rho}$ obtenue grâce au diaphragme 8 et au débitmètre volumique 9 sera donc de $\frac{2.3\%}{2} = \pm 1.15\%$

L'erreur sur le débit corrigé par la différence de pression sera de $\frac{0.8\%}{2} = \pm 0.4\%$.

On constate qu'en l'absence de régulation, la variation de densité entraîne une variation de débit de - 6.4% à +6.1% tandis qu'avec la régulation, la variation de débit sera comprise dans une plage d'environ +/-1.6%, en particulier lorsque le circuit de dosage 1 comprend une carte électronique 11. En l'absence de la carte électronique 11, la variation de débit peut être comprise entre -3% et +3%.

Le de dosage de carburant à l'ai d'un tel circuit de dosage 1 de carburant comprend alors les étapes suivantes :

- déterminer S1 une différence de pression aux bornes du doseur 6,
- mesurer S2 un débit volumique du carburant à l'aide du débitmètre volumique 9,
- calculer S3, à partir de la différence de pression, du débit volumique et de constantes liées au diaphragme 8, la densité du carburant,
- déterminer une information sur le débit volumique du carburant et transmettre S4 cette information à la carte électronique 11 afin que la la carte électronique 11 ajuste une consigne de contrôle du doseur 6 en tenant compte de la densité du carburant.

On notera que le débit du carburant est contrôlé S4 en faisant recirculer un débit variable de carburant vers la pompe 4 au moyen de la soupape de régulation 5.

**Revendications**

1.  Circuit de dosage (1) de carburant d'une turbomachine comprenant :

    - un doseur (6),
    - une pompe (4) configurée pour faire circuler un débit de carburant vers le doseur (6),
    - une soupape de régulation (5) configurée pour renvoyer un débit excédentaire de carburant délivré au doseur (6) vers la pompe (4) en fonction d'une différence de pression de carburant aux bornes du doseur (6),
    - un diaphragme (8) et
    - un débitmètre volumique (9) configuré pour déterminer le débit volumique du carburant passant par le diaphragme (9),

    le circuit de dosage (1) étant **caractérisé en ce que** le diaphragme (8) et le débitmètre volumique (9) sont montés en parallèle du doseur (6) dans un conduit de dérivation (7), en aval de la soupape de régulation (5), afin de déterminer une densité du carburant circulant dans le circuit de dosage (1).

2.  Circuit de dosage (1) selon la revendication 1, dans lequel le débitmètre volumique (9) est monté en amont ou en aval du diaphragme (8).

3.  Circuit de dosage (1) selon l'une des revendication 1 ou 2, comprenant en outre une carte électronique (11) configurée pour recevoir une information du débitmètre volumique (9) sur le débit volumique du carburant et ajuster une consigne de contrôle du doseur (6) en tenant compte de la densité du carburant ainsi déterminée.

4.  Circuit de dosage (1) selon l'une des revendications 1 à 3, dans lequel la pompe (4) comprend une pompe (4) volumétrique.

5.  Turbomachine comprenant un circuit de dosage (1) de carburant selon l'une des revendications 1 à 4.

6.  Procédé (S) de dosage de carburant mis en œuvre dans un circuit de dosage (1) de carburant selon l'une des revendications 1 à 4, **caractérisé en ce qu'**il comprend les étapes suivantes :

    - déterminer (S1) une différence de pression aux bornes du doseur (6),
    - mesurer (S2) un débit volumique du carburant à l'aide du débitmètre volumique (9),
    - calculer (S3), à partir de la différence de pression, du débit volumique et de constantes liées au diaphragme (8), la densité du carburant.

7.  Procédé (S) de dosage selon la revendication 6, comprenant en outre une étape (S4) au cours de laquelle le débitmètre transmet une information sur le débit volumique du carburant à une carte électronique (11) et la carte électronique (11) ajuste une consigne de contrôle du doseur (6) en tenant compte de la densité du carburant.

8.  Procédé (S) de dosage selon l'une des revendications 6 ou 7, dans lequel le débit du carburant est contrôlé (S4) en faisant recirculer un débit variable de carburant vers la pompe (4) au moyen de la soupape de régulation (5).

**Patentansprüche**

1.  Kraftstoffmesskreis (1) einer Turbomaschine, umfassend:

    - einen Dosierer (6),
    - eine Pumpe (4), die ausgelegt ist, damit eine Kraftstoffmenge zum Dosierer (6) zirkuliert,
    - ein Regelventil (5), das ausgelegt ist, um in Abhängigkeit einer Kraftstoffdruckdifferenz an den Anschlüssen des Dosierers (6) eine überflüssige Menge Kraftstoff, die an den Dosierer (6) geschickt wurde, zur Pumpe (4) zurückzuschicken,
    - eine Membran (8) und
    - einen Volumen-Mengenmesser (9), der ausgelegt ist, um die Volumenmenge des Kraftstoffs zu bestimmen, der die Membran (9) durchquert,

    wobei der Messkreis (1) **dadurch gekennzeichnet ist, dass** die Membran (8) und der Volumen-Mengenmesser (9) parallel zum Dosierer (6) in einer Umleitungsleitung (7) nach dem Regelventil (5) angebracht sind, um eine Dichte des Kraftstoffs zu bestimmen, der in dem Messkreis (1) zirkuliert.

2. Messkreis (1) nach Anspruch 1, wobei der Volumen-Mengenmesser (9) vor oder nach der Membran (8) angebracht ist.

3. Messkreis (1) nach einem der Ansprüche 1 oder 2, umfassend ferner eine elektronische Karte (11), die ausgelegt ist, um eine Information vom Volumen-Mengenmesser (9) über die Volumenmenge des Kraftstoffs zu erhalten und einen Steuersollwert des Dosierers (6) unter Berücksichtigung der derart bestimmten Dichte des Kraftstoffs einzustellen.

4. Messkreis (1) nach einem der Ansprüche 1 bis 3, wobei die Pumpe (4) eine Verdrängerpumpe (4) umfasst.

5. Turbomaschine, umfassend einen KraftstoffMesskreis (1) nach einem der Ansprüche 1 bis 4.

6. Kraftstoffmessverfahren (S), das in einem Kraftstoffmesskreis (1) nach einem der Ansprüche 1 bis 4 durchgeführt wird, **dadurch gekennzeichnet, dass** es die folgenden Schritte umfasst:

   - Bestimmen (S1) einer Druckdifferenz an den Anschlüssen des Dosierers (6),
   - Messen (S2) einer Volumenmenge des Kraftstoffs mit Hilfe des Volumen-Mengenmessers (9),
   - Berechnen (S3), ausgehend von der Druckdifferenz, der Volumenmenge und von Konstanten in Verbindung mit der Membran (8), der Dichte des Kraftstoffs.

7. Messverfahren (S) nach Anspruch 6, umfassend ferner einen Schritt (S4), bei dem der Mengenmesser eine Information über die Volumenmenge des Kraftstoffs an eine elektronische Karte (11) überträgt und die elektronische Karte (11) einen Steuersollwert des Dosierers (6) unter Berücksichtigung der derart bestimmten Dichte des Kraftstoffs einstellt.

8. Messverfahren (S) nach einem der Ansprüche 6 oder 7, wobei die Menge des Kraftstoffs durch Rezirkulation einer variablen Kraftstoffmenge zur Pumpe (4) mittels des Regelventils (5) gesteuert (S4) wird.


**Claims**

1. A fuel metering circuit (1) for a turbomachine comprising:

   - a metering device (6),
   - a pump (4) configured to circulate a fuel flow rate toward the metering device (6),
   - a regulating valve (5) configured to return an excess fuel flow rate delivered to the metering device (6) toward the pump (4) according to a difference in fuel pressure at the terminals of the metering device (6)
   - a diaphragm (8) and
   - a volume flow meter (9) configured to determine the volume flow rate of fuel passing through the diaphragm (9),

   the metering circuit (1) being **characterized in that** the diaphragm (8) and the volume flow meter (9) are mounted in parallel with the metering device (6) in a bypass duct (7), downstream of the regulating valve (5), in order to determine a density of the fuel circulating in the metering circuit (1).

2. The metering circuit (1) according to claim 1, wherein the volume flow meter (9) is mounted upstream or downstream of the diaphragm (8).

3. The metering circuit (1) according to any of claims 1 or 2, further comprising an electronic card (11) configured to receive information from the volume flow meter (9) on the volume flow rate of the fuel and adjust a metering device (6) monitoring setpoint by taking into account the fuel density thus determined.

4. The metering circuit (1) according to any of claims 1 to 3, wherein the pump (4) comprises a volumetric pump (4).

5. A turbomachine comprising a fuel metering circuit (1) according to any of claims 1 to 4.

6. A fuel metering method (S) implemented in a fuel metering circuit (1) according to any of claims 1 to 4, **characterized in that** it comprises the following steps:

- determining (S1) a pressure difference at the terminals of the metering device (6),
- measuring (S2) a volume flow rate of the fuel using the volume flow meter (9),
- calculating (S3), from the pressure difference, from the volume flow rate and from constants related to the diaphragm (8), the fuel density.

7. The metering method (S) according to claim 6, further comprising a step (S4) during which the flow meter transmits information on the volume flow rate of the fuel to an electronic card (11) and the electronic card (11) adjusts a metering device (6) monitoring setpoint by taking into account the fuel density.

8. The metering method (S) according to any of claims 6 or 7, wherein the fuel flow rate is monitored (S4) by recirculating a variable fuel flow rate toward the pump (4) by means of the regulating valve (5).

FIG. 1

EP 3 652 425 B1

**FIG. 2**

S

```
┌─────────────────────────────────────────────────────────────────┐
│        Déterminer une différence de pression aux bornes du doseur │── S1
└─────────────────────────────────────────────────────────────────┘
                                │
                                ▼
┌─────────────────────────────────────────────────────────────────┐
│              Mesurer le débit volumique du carburant              │── S2
└─────────────────────────────────────────────────────────────────┘
                                │
                                ▼
┌─────────────────────────────────────────────────────────────────┐
│                 Calculer la densité du carburant                  │── S3
└─────────────────────────────────────────────────────────────────┘
                                │
                                ▼
┌─────────────────────────────────────────────────────────────────┐
│  Contrôler le débit de carburant transmis au doseur en fonction de│── S4
│                     la densité du carburant                       │
└─────────────────────────────────────────────────────────────────┘
```

# FIG. 3

**EP 3 652 425 B1**

## RÉFÉRENCES CITÉES DANS LA DESCRIPTION

**Documents brevets cités dans la description**

- FR 3022000
- US 4809499 A
- US 7526911 B
- EP 1231368 A
- FR 2825120
- FR 1655944